# EUROPEAN PATENT APPLICATION

(11) **EP 2 752 121 A1**
(43) Date of publication of application: **09.07.2014**
(21) Application number: 12827477.6
(22) Date of filing: 23.08.2012
(51) Int. Cl.: A23L 1/30, A23G 3/50

(54) **CHEWING-ENHANCED FOOD**

(30) Priority: 01.09.2011 JP 2011190661; 09.04.2012 JP 2012088460
(71) Applicant: Meiji Co., Ltd., Koto-ku Tokyo 136-8908 (JP); Showa University, Tokyo 142-8555 (JP)
(72) Inventor: NAKAMURA Yoshitaka, Odawara-shi Kanagawa 250-0862 (JP); KANNO Takahiro, Odawara-shi Kanagawa 250-0862 (JP); IGAWA Megumu, Odawara-shi Kanagawa 250-0862 (JP); TAKAHASHI Takeshi, Odawara-shi Kanagawa 250-0862 (JP); MUKAI Yoshiharu, Tokyo 142-8555 (JP); UTSUMI Akemi, Tokyo 142-8555 (JP)
(74) Representative: TBK
(86) International application number: PCT/JP2012/071311
(87) International publication number: WO 2013/031636

(57) **Abstract**

The object of the present invention is to provide a food product for enhancing chewing ability having hardness, viscosity and so on suitable for the mouth of a small child from the age of one year to five years and eleven months, in particular a young child in the age of approximately one and one-half years who can utilize teeth for chewing after weaning. The food product for enhancing chewing ability of the present invention contains at least one type of main raw material selected from the flour group consisting of wheat flour, rice flour and starchy flour, and at least one type of secondary raw material selected from the group consisting of sorbitol and glycerol. This food product for enhancing chewing ability preferably has a breaking stress, breaking strain, brittleness stress and cohesiveness within predetermined ranges.

## Description

### TECHNICAL FIELD

The present invention relates to food products for enhancing chewing ability, such as baked goods that are particularly effective in a small child.

### BACKGROUND ART

Eating methods, such as the chewing of food, tasting of food or the like, are nurtured from the time of childhood. Eating methods develop along with the growth of the teeth and mouth during early childhood and school age. To sense that a taste is delicious, it is important that eating methods involve awareness of the five senses. In particular, important information about deliciousness is conveyed to the brain by the flavor and texture of food.

Here, the flavor is a complex sensation of a "taste perception" and an "olfactory perception of the aroma (return aroma) when the aroma emanating from a chewed item present at the base of the tongue and the pharynx escapes to the nose on the breath from the pharynx". It is taste buds widely distributed in the mucous membranes of the throat and tongue that play the role of transmitting the taste perception to the brain. Thus, the taste buds are particularly well distributed at the back of the tongue. Furthermore, it is very important to chew the food firmly with the right and left back molars from the taste perspective. Consequently, it is necessary for the taste perception and olfactory perception to work adequately by firmly chewing in order to activate the "taste" mechanism effectively.

Incidentally, the "Dental Health and Dietary Education Working Group" of the Ministry of Health, Labor and Welfare advocated a campaign with the objective of chewing each mouthful 30 times, the "Kaming 30 (Kaming three-zero)" in July 2009, to publicize to the Japanese public the importance of chewing well while eating, and this campaign has been promoted in the dietary education field. It becomes possible to chew using the teeth once an infant has been weaned. The molars appear at the approximate age of 1 year, but since the molar (tooth) surface is still small, even if the food is squashed, it will not be sufficiently grinded. Consequently, it is necessary during early childhood to provide foods in a form that combines hardness, size, and viscous resistance suitable for the mouth of the small child.

Conventionally, examples of products intended for enhancing chewing ability include proposed food products and food product compositions such as a chewing gum of which the main ingredient is a gum base intended to strengthen the jaw muscles (Patent Document 1), a health food product for use in enhancing the chewing function using the elastic force of conjac (Patent Document 2), food product compositions useful for developing the immature tissues of the oral cavity, which are manufactured by freeze-drying dehydration with glucomannan as an essential component (Patent Document 3), food product compositions manufactured by freeze-drying dehydration with curdlan as an essential component (Patent Document 4), gummi-jelly with gelatin as an essential component, and the like.

Moreover, baked goods for enhancing chewing ability have been proposed that are added function for enhancing chewing ability, having the texture of a sponge-like form and viscosity so that it isn't easy to bite through, by adding gelatin or gelatin plus egg whites as cohesiveness agents or thickening agents into the main raw materials and baking them (Patent Document 5).

### Prior art literature

### PATENT LITERATURE

Patent Document 1: Japanese Published Unexamined Patent Application No. S63-139553 (1988)
Patent Document 2: Japanese Published Unexamined Patent Application No. H01-010961 (1989)
Patent Document 3: Japanese Published Unexamined Patent Application No. H06-090687 (1994)
Patent Document 4: Japanese Published Unexamined Patent Application H06-165642 (1994)
Patent Document 5: Japanese Published Unexamined Patent Application H11-276081 (1999)

### SUMMARY OF THE INVENTION

### PROBLEM TO BE SOLVED BY THE INVENTION

However, chewing gum is inappropriate for small children due to the risks of aspiration and asphyxiation. Moreover, it is difficult to use this sort of chewing gum as an everyday food product for the purposes of enhancing chewing ability. Likewise for jelly, gummis and conjac, these serve only to enhance the elasticity originally present. In addition, it is difficult completely to avoid aspiration and asphyxiation in small children.

In addition, baked goods for enhancing chewing ability (Patent Document 5) are baked goods such as biscuits in a food form to be ingested by small children, and those are intended to enhance chewing ability. But it is just the food provided viscosity to be unable to readily be chewed, while maintaining the soft, sponge-like texture that corresponds to current tastes for a simple softened texture. In other words, it cannot be said that it is a food fully-considered for hardness, size and viscosity suitable for the mouth of a small child of the age of approximately one and one-half years.

The object of the present invention is to provide a form of food that has hardness, viscosity and the like suitable for the mouth of a small child from the age of 1 year to 5 years and 11 months, and in particular for the mouth of a small child of the age of approximately one and one-half years who can utilize the teeth for chewing after weaning.

### MEANS TO SOLVE THE PROBLEM

A food product for enhancing chewing ability according to the present invention can be obtained by adding at least one type of secondary raw material selected from the group consisting of sorbitol and glycerol to at least one type of main raw material selected from the flour group consisting of wheat flour, rice flour and starchy flour, and then baking. In other words, these food products for enhancing chewing ability are baked goods. The physical properties such as breaking stress, breaking strain, brittleness stress and cohesiveness can be adjusted in this food product for enhancing chewing ability. As a result, compared to common baked goods, this food product for enhancing chewing ability has low breaking stress and brittleness stress, while the breaking strain and cohesiveness are high, qualities that no previous food texture has been able to achieve. Furthermore, this food product for enhancing chewing ability is intended for a small child from the age of 1 year old to the age of 5 years and 11 months.

In the meantime, when the food product for enhancing chewing ability according to the present invention is provided to a small child during the period from before the deciduous dental arch is complete until the eruption of the permanent teeth begins (from the age of 1 year old to the age of 5 years and 11 months) in order to evaluate the chewing movements of small children by the number of times a mouthful of food, the food product for enhancing chewing ability according to the present invention is chewed more times compared to common baked goods, and clearly animates the chewing movements of the small child. Meanwhile, when the same investigation was conducted with adults for comparison, the differences in the chewing movement indicators in the case of the small child were surprisingly not observed. In other words, the present inventors have newly discovered that the results of the investigation and evaluation in adults with the permanent teeth are not applicable to development of the food product for enhancing chewing ability for a small child and it is necessary to evaluate the chewing movements in the small child of the target age during the actual ingestion of food products for development of it in order to provide baked goods that enhance chewing movements in a small child during the period from before the deciduous dental arch is complete until the eruption of the permanent teeth begins (from the age of 1 year old to the age of 5 years and 11 months).

Additionally, since the breaking stress and brittleness stress are low while the breaking strain and cohesiveness are high for the food product for enhancing chewing ability according to the present invention, it is difficult to form a food bolus in the oral cavity, and it was confirmed that more of the jaw movements associated with chewing are necessary only in a small child with underdeveloped chewing ability. In other words, the food products for enhancing chewing ability according to the present invention are entirely novel baked goods that are particularly able to enhance chewing ability in a small child.

There are no examples up to the present of using such methods to investigate the provision of baked goods for enhancing chewing ability (food products for enhancing chewing ability) intended for a small child.

Moreover, as an evaluation of chewing movements for when the baked goods for enhancing chewing ability (food products for enhancing chewing ability) according to the present invention is provided to a small child during the period from before the deciduous dental arch is complete until the eruption of the permanent teeth begins (from the age of 1 year old to the age of 5 years and 11 months), not only is the number of times a mouthful is chewed greater when compared to ingesting common baked goods, but it was confirmed to be 30 times or more. Consequently, also from the perspective of being able to provide a form of food that complies with the "Kaming 30" campaign that has the goal of chewing each mouthful 30 times, the food products for enhancing chewing ability according to the present invention are different than the previous common baked goods.

Furthermore, in the abovementioned food product for enhancing chewing ability, the amount of secondary raw materials is preferably within the range of 0.5 mass% or more and 16 mass% or less, and further preferably within the range of 1 mass% or more and 10 mass% or less, based on the mass of the entire raw materials.

In addition, the abovementioned food product for enhancing chewing ability preferably has a breaking stress within the range of 0.3×10⁷ N/m² or more and 4.5×10⁷ N/m² or less, and further preferably within the range 0.6×10⁷ N/m² or more and 4.0×10⁷ N/m² or less.

Additionally, the abovementioned food product for enhancing chewing ability with a breaking stress within the abovementioned range preferably has a breaking strain within the range of 20% or more and 65% or less, and further preferably within the range 25% or more and 50% or less.

Moreover, the abovementioned food product for enhancing chewing ability having a breaking stress and a breaking strain within the abovementioned ranges preferably has a brittleness stress within the range 0 N/m² or more and 2×10⁶ N/m² or less and a cohesiveness within the range 0.1 or more and 0.5 or less, and further preferably has a brittleness stress within the range 0 N/m² or more and 1×10⁶ N/m² or less and a cohesiveness within the range 0.2 or more and 0.4 or less.

In addition, the abovementioned food product for enhancing chewing ability preferably includes thickening agents such as soya protein, milk protein, chicken egg, starch syrup, isomerized glucose syrup, xanthan gum, guar gum, carrageenan, and the like, as other secondary raw materials. Furthermore, in such a case, it is preferable for the soya protein to account for a proportion that is1 mass% or more and 10 mass% or less, the milk protein to account for a proportion that is 1 mass% or more and 10 mass% or less, the chicken egg to account for a proportion that is 1 mass% or more and 10 mass% or less, the syrup to account for a proportion that is 2 mass% or more and 20 mass% or less, the isomerized glucose syrup to account for a proportion that is 2 mass% or more and 20 mass% or less, the xanthan gum to account for a proportion that is 0.02 mass% or more and 0.2 mass% or less, the guar gum to account for a proportion that is 0.02 mass% or more and 0.2 mass% or less, and the carrageenan to account for a proportion that is 0.02 mass% or more and 0.2 mass% or less, based on the mass of the entire raw materials for this food product for enhancing chewing ability.

Additionally, the abovementioned food product for enhancing chewing ability preferably has a width within the range of 18 mm or more and 28 mm or less, a thickness within the range of 7 mm or more and 14 mm or less, and a length within the range of 50 mm or more and 100 mm or less. Furthermore, these dimensions were determined for a small child of an age from 1 year 6 months to 3 years from the consideration of the average distance between the corners of the mouth (31.0 ± 2.4 mm to 34.5 ± 3.8 mm), the average maximum mouth opening (28.1 ± 3.3 mm to 33.6 ± 4.0 mm), and the average width of the palm of the hand (47.0 ± 1.6 mm to 50.4 ± 2.1 mm). Specifically, the preferred width is 2/3 or less of the average distance between the corners of the mouth for a small child and is the width suitable for capturing a food by the corners of the mouth (distance suitable for ingesting food), the preferred thickness is one-third or less of the average maximum mouth opening for a small child and is the thickness suitable for chewability (distance that biting force is properly transmitted to the jaws), and the preferred length is the average width or more of the palm of the hand for a small child and is the length suitable for one feeding (suitable length for a rod-shaped food product being held while eating).

Furthermore, the average maximum mouth opening for a small child of an age from 1 year 6 months to 2 years is referenced in the "Report of a Survey of Oral Cavity Volume in Infants and Small Children, Subsidized Child Care Program of the Social Welfare and Medical Service Corp., published in March, 2002". Moreover, the average distance between the corners of the mouth and the average width of the palm of the hand in a small child of an age from 1 year 6 months to 3 years can be found in: Emi KURAMOTO, Fumiyo TAMURA, Mai OHKUBO, Hikaru ISHIKAWA, Yoshiharu MUKAI. "The Effect of Spoon Shape on Lip Functions during Self-feeding in Infants", *sh**o̅**ni hoken kenky**u̅* [Japan J Child Health] **2002** 61(1).

### EFFECT OF THE INVENTION

As mentioned above, according to the present invention, it is possible to provide a food product for enhancing chewing ability that provides hardness, viscosity and the like suitable for the mouth of a small child during the period from before the deciduous dental arch is complete until the eruption of the permanent teeth begins (from the age of 1 year old to the age of 5 years and 11 months). Furthermore, using the food product for enhancing chewing ability according to the present invention, it is possible to provide a form of food that complies with the "Kaming 30" campaign that has the goal of chewing each mouthful 30 times.

### BRIEF EXPLANATION OF FIGURES

[Figure 1] A figure of characteristic curve showing the relation between breaking stress, breaking strain and brittleness stress. Note that in this figure, P₁ represents the breaking stress, P₁-P₂ represents the brittleness stress, and ε₁ represents the breaking strain.
[Figure 2] A figure of characteristic curve showing the cohesiveness relation.
[Figure 3] A pattern diagram showing the positional relation of the reference points and measuring points according the chewing evaluation 2 of Working Example 1.
[Figure 4] A graph showing the displacement of the reference point R according the chewing evaluation 2 of Working Example 1.
[Figure 5] A graph showing the displacement of the reference point L according the chewing evaluation 2 of Working Example 1.
[Figure 6] A graph showing the displacement of the reference point P according the chewing evaluation 2 of Working Example 1.
[Figure 7] A graph showing the displacement of the reference point R according the chewing evaluation 2 of Comparative Example 1.
[Figure 8] A graph showing the displacement of the reference point L according the chewing evaluation 2 of Comparative Example 1.
[Figure 9] A graph showing the displacement of the reference point P according the chewing evaluation 2 of Comparative Example 1.

### MODES FOR IMPLEMENTING THE INVENTION

The present invention is explained in greater detail below, but the present invention is not limited to the individual modes mentioned below.

The food products for enhancing chewing ability according to the embodiments of the present invention include a flour such as wheat flour, rice flour, starchy flour, or the like as the main raw materials, and also include sorbitol, glycerol, and mixtures thereof as the specific secondary raw materials. Moreover, depending on need, these food products for enhancing chewing ability include fats and oils, sugar, chicken egg, dairy products, or the like.

These food products for enhancing chewing ability are obtained by mixing the main raw materials and the secondary raw materials, and baking the mixture under predetermined baking conditions after molding the mixture using the usual methods. For example, when the food product for enhancing chewing ability is a biscuit, the food product for enhancing chewing ability is obtained by making a dough by mixing the main raw materials and the secondary raw materials in a mixer, and after molding and storing the dough in a refrigerator for 1 hour, cutting the dough, then baking the cut dough in an oven at 140 °C to 200 °C for 5-10 minutes. The food products for enhancing chewing ability according to the embodiments of the present invention are preferably what are referred to as "baked goods". The constituents, ingredients and preparation methods for the food products for enhancing chewing ability are explained in further detail below.

For example, when the food product for enhancing chewing ability according to the embodiments of the present invention is a "baked good", the main raw materials can be flour such as wheat flour, rice flour, starchy flour, or the like. Additionally, when the food product for enhancing chewing ability according to the embodiments of the present invention is a "biscuit", raw materials such as fats and oils, sugar, chicken egg, dairy products, baking powder, or the like can be added to the flour such as wheat flour, rice flour, starch, or the like. Furthermore, examples of "baked goods" include biscuits, cookie, butter cookies, pie, pretzels, and the like. In particular, in order to obtain hardness, viscosity and the like suitable for the mouth of the small child, proteins such as soya protein or milk protein can be added to the food products for enhancing chewing ability according to the embodiments of the present invention.

In addition, examples of the main raw material for the food products for enhancing chewing ability according to the embodiments of the present invention include wheat flour, rice flour, starchy flour, and the like. More specifically, flours that can be used as the main raw materials include cereal products and processed cereal products such as soft wheat flour, all-purpose flour, bread flour, rye flour, high quality rice flour made from non-glutinous rice, rice flour for dumplings, cassava starchy flour, arrowroot starchy flour, rice starchy flour, wheat starchy flour, sweet potato starchy flour, potato starchy flour, corn starchy flour, buckwheat flour, and the like.

Examples of secondary raw materials include sorbitol, glycerol, and mixtures thereof. Examples of other optional secondary raw materials include the secondary raw materials used in the preparation of common baked goods such as fats and oils, sugar, chicken egg, dairy products, baking powder and the like. Furthermore, these secondary raw materials can be used singly or in suitable combinations. More specific examples of secondary raw materials include fats and oils such as butter, margarine, shortening, fat spread, refined fats and oils, peanut oil, palm oil, cottonseed oil, sunflower oil, palm kernel oil, palm oil, canola oil, corn oil, soybean oil, fish oil, safflower oil, sesame oil, olive oil, lard, beef tallow, and the like, chicken egg products such as lecithin, raw egg, egg yolks, egg whites, and the like, proteins such as soya protein, milk proteins, and the like, sugar products such as sugar, granulated sugar, brown sugar, syrup, glucose, fructose, isomerized glucose syrup, honey, maple syrup, and the like, dairy products such as raw milk, whole milk powder, skim milk powder, milk, condensed milk, fresh cream, and the like, other cereal and seed products such as toasted soya flour, pistachios, sunflower seeds, hazelnuts, pecans, macadamia nuts, peanuts, almonds, perilla, cashew nuts, pumpkin seeds, chestnuts, walnuts, Opium poppy, coconut, sesame seeds, dried fruit, and the like, cocoa powder, dietary fiber, salt, fruit juice, vitamins, minerals, and sweeteners such as aspartame, sucralose, acesulfame potassium, stevia, and the like, leavening agents such as sodium bicarbonate, ammonium carbonate, baking powder, and the like, thickening agents such as xanthan gum, guar gum, carrageenan, and the like. Additionally, depending on need, dyes, fragrances, emulsifiers, enzymes, yeast, and the like can also be added to the secondary raw materials.

What is important in the present invention is to add a predetermined amount of at least one of sorbitol and glycerol to the raw material in order to obtain hardness, viscosity and the like suitable for the mouth of the small child. For example, a suitable amount of fat and oil, sugar is added to the flour comprising soft wheat flour and soya protein, and furthermore after adding secondary raw materials to the flour so that the secondary raw material content accounts for 0.5 mass% or more and 16 mass% or less based on the mass of the entire raw materials, a dough prepared from these raw materials is baked to obtain a baked good that enhances chewing ability in a small child during the period from before the deciduous dental arch is complete until the eruption of the permanent teeth begins (from the age of 1 year old to the age of 5 years and 11 months), in other words a food product for enhancing chewing ability according to the embodiments of the present invention.

The food product for enhancing chewing ability according to the present invention can be prepared according to conventional baked goods preparation methods.

For example, when the food product for enhancing chewing ability is a biscuit, first a dough is prepared by mixing predetermined amounts of the main raw materials and the secondary raw materials. Examples of methods for preparing a dough include the sugar batter method, flour batter method, and the like. Then, the dough obtained is molded into the predetermined shape and size, and is baked. During baking, the dough is heated so that the surface temperature of the dough reaches 100 °C or higher. Furthermore, when the food product for enhancing chewing ability is a biscuit, the dough is heated so that the surface temperature of the dough reaches within the range of 140 °C to 200 °C

Furthermore, in the preparation of a food product for enhancing chewing ability according to an embodiment of the present invention, common food heating methods such as steaming using steam or the like, or frying in oil using hot oil or the like, can also be used.

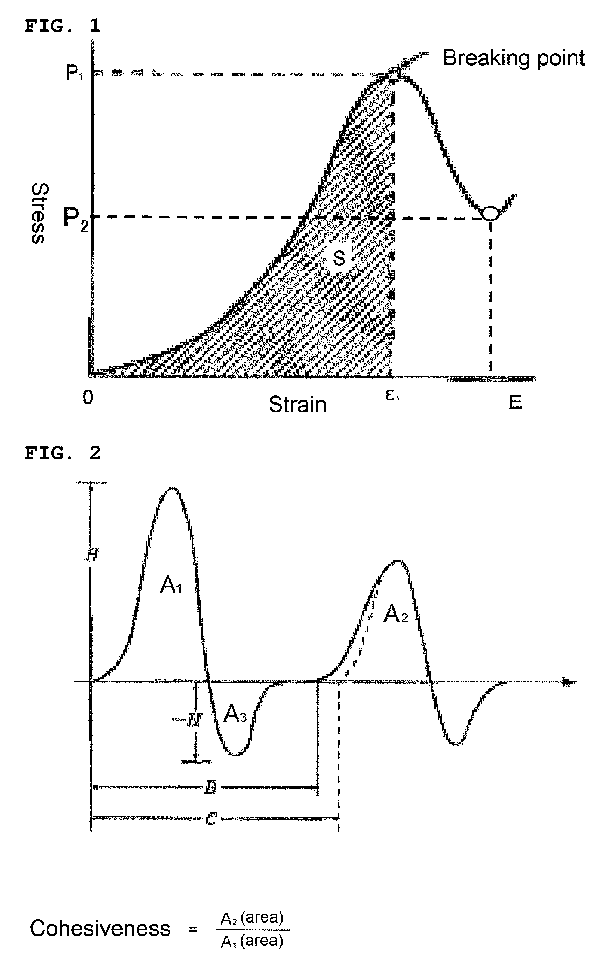

Thus, by measuring the physical properties of the food product for enhancing chewing ability according to an embodiment of the present invention, it is possible to quantify specific indicators, such as the hardness, viscosity and the like that can produce the effect of the food product for enhancing chewing ability according to an embodiment of the present invention. For example, the food product for enhancing chewing ability can be compressed using a rheometer and the breaking strain characteristic curve shown in Figure 1 can be obtained. Thus, the indicator values of the breaking stress, breaking strain and brittleness stress can be derived based on this breaking strain characteristic curve. Additionally, by repeating the operation of compressing the food product for enhancing chewing ability using a creep meter, the breaking strain characteristic curve shown in Figure 2 can be obtained. Thus, the indicator value of the cohesiveness can be derived based on this breaking strain characteristic curve.

The food product for enhancing chewing ability according to an embodiment of the present invention preferably has a breaking stress within the range of 0.3×10⁷ N/m² or more and 4.5×10⁷ N/m² or less, and more preferably within the range of 0.6×10⁷ N/m² or more and 4.0×10⁷ N/m² or less. Moreover, the breaking strain is preferably within the range of 20% or more and 65% or less, and more preferably within the range of 25% or more and 50% or less. The brittleness stress is preferably within the range of 0 N/m² or more and 2×10⁶ N/m² or less, and more preferably within the range of 0 N/m² or more and 1×10⁶ N/m² or less. In addition, the cohesiveness is preferably within the range of 0.1 or more and 0.5 or less, and more preferably within the range of 0.2 or more and 0.4 or less.

Furthermore, for such physical properties, it is preferable for the breaking stress to be within the abovementioned range, it is more preferable for both the breaking stress and the breaking strain to be within their abovementioned respective ranges, and it is further preferably for all 4 types of physical property, that is the breaking stress, breaking strain, brittleness stress and cohesiveness, to be within their abovementioned respective ranges.

Furthermore, such physical properties can be determined by the following methods.

The breaking stress, breaking strain, and brittleness stress can be measured using a Sun RhEO METER CR-500DX (Sun Scientific Co., Ltd.) as a rheometer. Specifically, after preparing a sample with 2 cm wide, 1 cm high, and 7 cm long, the breaking strain characteristic curve is obtained by penetrating the sample with a wedge-type plunger having 1 cm in width and a blade thickness of 1 mm (contact surface 1 mm²) at an approach velocity of 60 mm/min, and the breaking stress, breaking strain and brittleness stress were determined from this breaking strain characteristic curve.

Additionally, the cohesiveness was measured using an RE2-3305B (Yamaden Co., Ltd.) as a creep meter. Specifically, after preparing a sample with 2 cm wide, 1 cm high, and 7 cm long, the texture measurement was carried out on this sample based on the two-bite method using a 10 mm diameter cylindrical plunger under conditions of 66.6% clearance and a compression rate of 300 mm/min.

### <Working examples and comparative examples>

The present invention is described in further detail by showing the working examples and comparative examples, but the present invention is not limited thereby.

### Working Example 1

### <Preparation of cookies>

First, after the raw material was prepared by adding 6.5 parts by mass of protein, 35.6 parts by mass of sugar, 14.7 parts by mass of fat and oil, 1.0 part by mass of chicken egg (dried), 2.4 parts by mass of vitamins and minerals, 3.0 parts by mass of glycerol, and 5.0 parts by mass of sorbitol to 31.8 parts by mass of soft wheat flour, a dough was prepared from this raw material (see Table 1). Next, after molding this dough so that the cookies after baking would have the dimensions 20.5 mm × 9.5 mm × 70.0 mm, this was baked at 165 °C to prepare the intended cookies.

### <Cookie characteristic evaluations>

### (1) Physical characteristic evaluation

The breaking stress, breaking strain, brittleness stress and cohesiveness of the abovementioned cookies were measured using the aforementioned rheometer under the aforementioned conditions. The results showed these cookies to have a breaking stress of 1.5 × 10⁷ N/m², strain of 41.1%, brittleness stress of 0 N/m², and cohesiveness of 0.33 (see Table 2).

### (2) Chewing evaluation 1

A chewing evaluation was conducted in case that the adults and small children 2 years and 8 months (hereinafter referred to as "test subjects") were given one mouthful (2 cm × 2 cm × 1 cm for adults, 2 cm × 1 cm × 1 cm for small children) of the abovementioned cookies, and in case that test subjects were free to take a mouthful to chew. In the time observations, colored markers or seals were pasted to the skin of the face of the test subjects to set up 8 measurement points on the faces of the test subjects. Images of the test subjects' faces were recorded with 2 or 3 digital video cameras, and the number of times the test subject chewed was analyzed from the movements of the test subject's jaws and lips from this recorded data using a three-dimensional behavior analysis system (Library Co., Ltd., Sunflower GV1401k).

The results showed that when free to take a mouthful to chew, small children chewed 40 times while adults chewed 16 times (see Table 3). Moreover, when given a mouthful to chew, the small children chewed 46 times while adults chewed 16 times (see Table 4).

### (3) Chewing evaluation 2

A male child, 5 years 8 months (no. of teeth: 20; dental age: IIA; Kaup index: 13.9); male child, 5 years 4 months (no. of teeth: 19; dental age: IIA; Kaup index: 14.7); male child, 4 years 10 months (no. of teeth: 20; dental age: IIA; Kaup index: 16.1); male child, 3 years 6 months (no. of teeth: 20; dental age: IIA; Kaup index: 16.1); male child, 2 years 6 months (no. of teeth: 20; dental age: IC; Kaup index: 18.9); male child, 2 years 3 months (no. of teeth: 16; dental age: IC; Kaup index: 16.6); male child, 1 years 6 months (no. of teeth: 16; dental age: IC; Kaup index: 15.2); and, male child, 1 years 4 months (no. of teeth: 12; dental age: IC; Kaup index: 16.0), total 8 members was selected as test subjects. Note that the dental age here is what is referred to as the Hellman dental age, where "IIA" represents test subjects in the period when primary occlusion is complete and "IC" represents test subjects in the period when primary occlusion is started. Moreover, the Kaup index is an index that is used for evaluations of development and nutritional status in infants and small children, where a number of 22 or more indicates obesity and a number less than 13 means being too thin. The test subjects were in the range of average to slender.

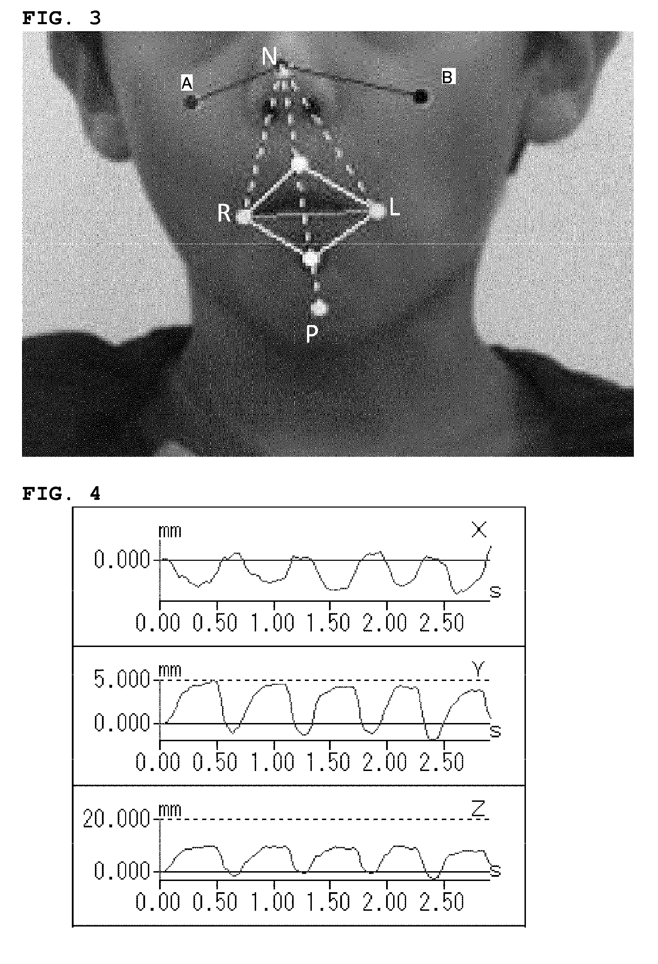

The appearance of test subjects when chewing a mouthful of the abovementioned cookies until swallowing was recorded with 2 or 3 digital video cameras in the same manner as mentioned above for chewing evaluation 1. Furthermore, as shown in Figure 3, during this, the face markers and seals were attached to the test subjects' left zygomatic arch (reference point A), right zygomatic arch (reference point B), tip of the nose (reference point N), left corner of the mouth (measurement point R), right corner of the mouth (measurement point L), and lower jaw (measurement point P), in the same manner as for chewing evaluation 1.

The abovementioned three-dimensional behavior analysis system was used to analyze the recorded data to derive displacements of the measurement points R, L and P based on the standard plane formed by the reference points A, B, and N. Specifically, with an image (1 scene) of the test subject immediately after taking a bite of the cookie as a standard, the displacements of measurement points R, L, and P are determined during 5 chewing movements (5 cycles).

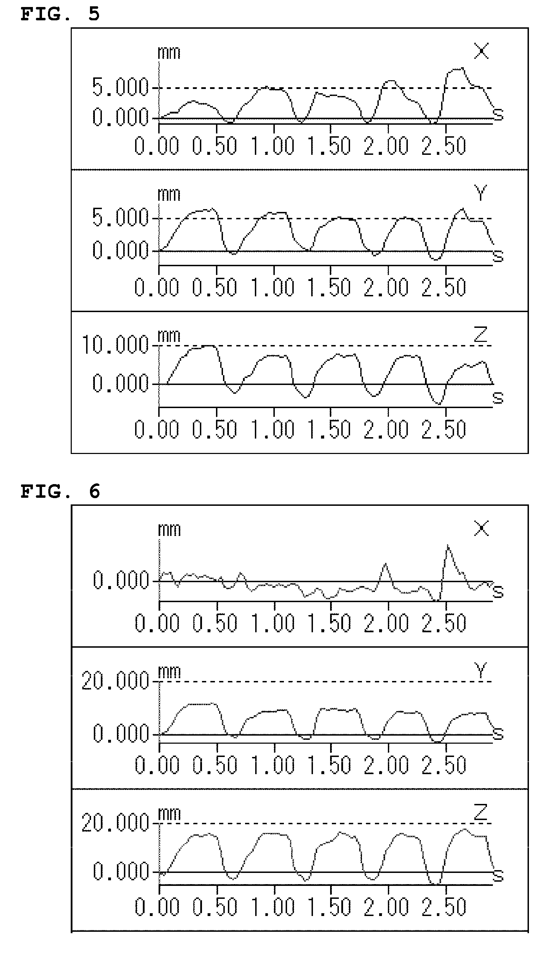

As a representative example, the displacements of the measurement points R, L, and P for a small child of age 5 years and 8 months were shown in Figures 4, 5, and 6, respectively. Note that when the face of the test subject is viewed from the front, the horizontal direction is taken as "X", the depth direction is taken as "Y", and the vertical direction is taken as "Z". When a test subject chews the abovementioned cookie, it is clear that the left corner of the mouth, right corner of the mouth, and lower jaw of the test subject readily change positions in all 3 directions. In other words, this cookie will clearly not be chewed by the test subject in chopper fashion (with the teeth making simple up and down movements with some frequency), but readily be chewed in a grinding fashion (grinding movements with horizontal movements of the molars in addition to up and down movements).

Thus, grinding chewing is believed to promote the growth of the jaw bone to form a space to receive a number of teeth greater than that of the primary dentition as the primary dentition is replaced by the permanent dentition to prevent crowding in the rows of teeth. Moreover, with grinding chewing, not only the jaw muscles but also the neck muscles are used. For this reason, grinding chewing also helps to support the head firmly and established good posture. Furthermore, it is known that engaging in grinding chewing prompts secretion of saliva and hormone to promote blood flow to the brain, and consequently contributes to the growth and development of healthy infants.

### Working Example 2

Except for changing the mass of soft wheat flour into 38.8 parts by mass, changing the mass of glycerol into 0.5 parts by mass and changing the mass of sorbitol into 0.5 parts by mass, cookies were prepared in the same manner as in Working Example 1, and the cookie physical characteristic evaluations were carried out in the same manner as in Working Example 1 (see Table 1).

The results showed these cookies to have a breaking stress of 3.8 × 10⁷ N/m², strain of 28.5%, brittleness stress of 0 N/m², and cohesiveness of 0.24 (see Table 2).

### Working Example 3

Except for changing the mass of soft wheat flour into 37.8 parts by mass, changing the mass of glycerol into 1.0 parts by mass and changing the mass of sorbitol into 1.0 parts by mass, cookies were prepared in the same manner as in Working Example 1, and the cookie physical characteristic evaluations were carried out in the same manner as in Working Example 1 (see Table 1).

The results showed these cookies to have a breaking stress of 3.7 × 10⁷ N/m², strain of 27.3%, brittleness stress of 0 N/m², and cohesiveness of 0.26 (see Table 2).

### Working Example 4

Except for changing the mass of soft wheat flour into 35.8 parts by mass, changing the mass of glycerol into 2.0 parts by mass and changing the mass of sorbitol into 2.0 parts by mass, cookies were prepared in the same manner as in Working Example 1, and the cookie physical characteristic evaluations were carried out in the same manner as in Working Example 1 (see Table 1).

The results showed these cookies to have a breaking stress of 2.7 × 10⁷ N/m², strain of 32.1%, brittleness stress of 0 N/m², and cohesiveness of 0.32 (see Table 2).

### Working Example 5

Except for changing the mass of soft wheat flour into 31.8 parts by mass, changing the mass of glycerol into 6.6 parts by mass and changing the mass of sorbitol into 1.4 parts by mass, cookies were prepared in the same manner as in Working Example 1, and the cookie physical characteristic evaluations were carried out in the same manner as in Working Example 1 (see Table 1).

The results showed these cookies to have a breaking stress of 1.1 × 10⁷ N/m², strain of 41.3%, brittleness stress of 0 N/m², and cohesiveness of 0.36 (see Table 2).

### Working Example 6

Except for changing the mass of soft wheat flour into 29.5 parts by mass, changing the mass of vitamins and minerals into 2.7 parts by mass and changing the mass of glycerol into 5.0 parts by mass, cookies were prepared in the same manner as in Working Example 1, and the cookie physical characteristic evaluations were carried out in the same manner as in Working Example 1 (see Table 1).

The results showed these cookies to have a breaking stress of 0.76 × 10⁷ N/m², strain of 45.9%, brittleness stress of 0 N/m², and cohesiveness of 0.37 (see Table 2).

### Working Example 7

Except for changing the mass of soft wheat flour into 27.8 parts by mass, changing the mass of glycerol into 12.0 parts by mass and changing the mass of sorbitol into 0 parts by mass, cookies were prepared in the same manner as in Working Example 1, and the cookie physical characteristic evaluations were carried out in the same manner as in Working Example 1 (see Table 1).

The results showed these cookies to have a breaking stress of 0.81 × 10⁷ N/m², strain of 48.2%, brittleness stress of 0 N/m², and cohesiveness of 0.42 (see Table 2).

### Working Example 8

Except for changing the mass of soft wheat flour into 23.8 parts by mass, changing the mass of glycerol into 8.0 parts by mass and changing the mass of sorbitol into 8.0 parts by mass, cookies were prepared in the same manner as in Working Example 1, and the cookie physical characteristic evaluations were carried out in the same manner as in Working Example 1 (see Table 1).

The results showed these cookies to have a breaking stress of 0.57 × 10⁷ N/m², strain of 64.7%, brittleness stress of 0 N/m², and cohesiveness of 0.43 (see Table 2).

### (Comparative Example 1)

### (1) Physical characteristic evaluations and chewing evaluation 1

Except for changing the mass of soft wheat flour into 53.5 parts by mass, changing the mass of protein into 0 parts by mass, changing the mass of sugar into 17.6 parts by mass, changing the mass of fat and oil into 17.1 parts by mass, changing the mass of chicken egg (dried) into 0 parts by mass, changing the mass of vitamins and minerals into 0.9 parts by mass, changing the mass of glycerol into 0 parts by mass, changing the mass of sorbitol into 0 parts by mass and adding 10.9 parts by mass of powdered milk, cookies were prepared in the same manner as in Working Example 1, and the cookie physical characteristic evaluations were carried out in the same manner as in Working Example 1 (see Table 1).

The results showed these cookies to have a breaking stress of 4.9 × 10⁷ N/m², strain of 15.8%, brittleness stress of 3.5 N/m², and cohesiveness of 0 (see Table 2). In addition, the results showed that when free to take a mouthful to chew, small children chewed 20 times while adults chewed 13 times (see Table 3).

### (2) Chewing evaluation 2

Except for using the cookies of Comparative Example 1, the chewing evaluation 2 was carried out in the same manner as in Working Example 1.

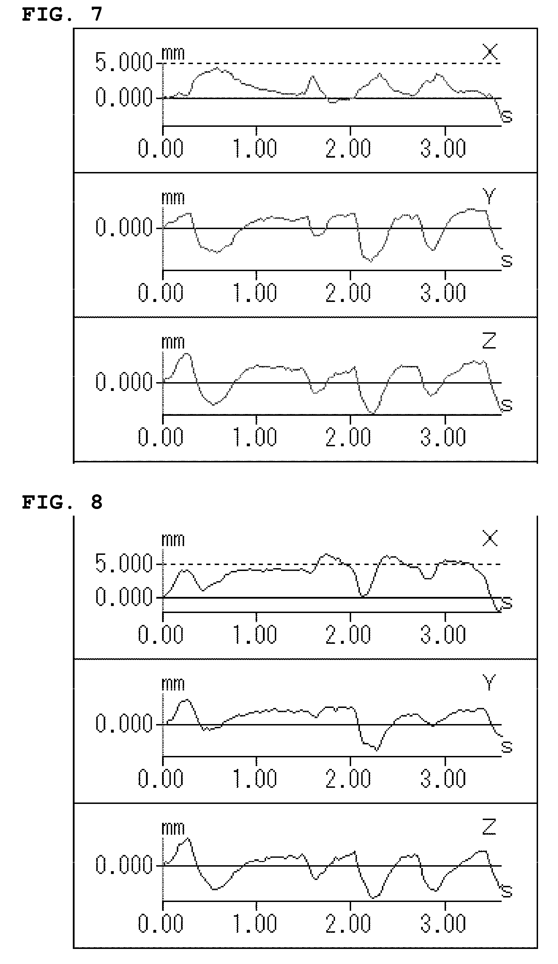

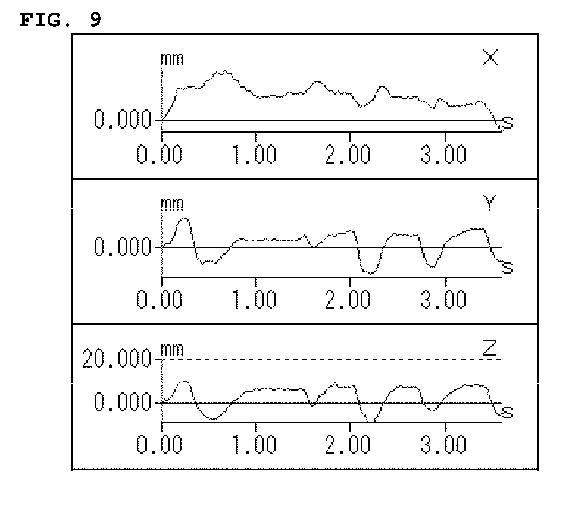

As a representative example, the displacements of the measurement points R, L, and P for a small child of age 5 years and 8 months were shown in Figures 7, 8, and 9, respectively. When a test subject chews the cookie of Comparative Example 1, it is clear that the left corner of the mouth, right corner of the mouth, and lower jaw of the test subject hardly change positions in all 3 directions. In other words, these cookies can be chewed by the test subject in a chopping manner, but clearly it is difficult to chew them in a grinding manner.

**[Table 1]**

| | Comparative Example 1 | Working Example 1 | Working Example 2 | Working Example 3 | Working Example 4 | Working Example 5 | Working Example 6 | Working Example 7 | Working Example 8 |
|---|---|---|---|---|---|---|---|---|---|
| Soft wheat flour | 53.5 | 31.8 | 38.8 | 37.8 | 35.8 | 31.8 | 29.5 | 27.8 | 23.8 |
| Protein | 0 | 6.5 | 6.5 | 6.5 | 6.5 | 6.5 | 6.5 | 6.5 | 6.5 |
| Powdered milk | 10.9 | 0 | 0 | 0 | 0 | 0 | 0 | 0 | 0 |
| Sugar | 17.6 | 35.6 | 35.6 | 35.6 | 35.6 | 35.6 | 35.6 | 35.6 | 35.6 |
| Fats and oils | 17.1 | 14.7 | 14.7 | 14.7 | 14.7 | 14.7 | 14.7 | 14.7 | 14.7 |
| Chicken egg (dried) | 0 | 1.0 | 1.0 | 1.0 | 1.0 | 1.0 | 1.0 | 1.0 | 1.0 |
| Vitamins & minerals | 0.9 | 2.4 | 2.4 | 2.4 | 2.4 | 2.4 | 2.7 | 2.4 | 2.4 |
| Glycerol | 0 | 3.0 | 0.5 | 1.0 | 2.0 | 6.6 | 5.0 | 12.0 | 8.0 |
| Sorbitol | 0 | 5.0 | 0.5 | 1.0 | 2.0 | 1.4 | 5.0 | 0 | 8.0 |
| Total | 100.0 | 100.0 | 100.0 | 100.0 | 100.0 | 100.0 | 100.0 | 100.0 | 100.0 |

**[Table 2]**

| | Comparative Example 1 | Working Example 1 | Working Example 2 | Working Example 3 | Working Example 4 | Working Example 5 | Working Example 6 | Working Example 7 | Working Example 8 |
|---|---|---|---|---|---|---|---|---|---|
| Breaking stress (×10⁷ N/m²) | 4.9 | 1.5 | 3.8 | 3.7 | 2.7 | 1.1 | 0.76 | 0.81 | 0.57 |
| Strain (%) | 15.8 | 41.1 | 28.5 | 27.3 | 32.1 | 41.3 | 45.9 | 48.2 | 64.7 |
| Brittleness stress (×10⁶ N/m²) | 3.5 | 0 | 0 | 0 | 0 | 0 | 0 | 0 | 0 |
| Cohesiveness | 0 | 0.33 | 0.24 | 0.26 | 0.32 | 0.36 | 0.37 | 0.42 | 0.43 |

**[Table 3]**

| Baked goods | Working Example 1 | Comparative Example 1 |
|---|---|---|
| No. of times chewed for small children (times) | 40 | 20 |
| No. of times chewed for adults (times) | 16 | 13 |

**[Table 4]**

| Baked goods | Working Example 1 |
|---|---|
| No. of times chewed for small children (No.) | 46 |
| No. of times chewed for adults (times) | 16 |

As is clear from the abovementioned results, when the cookies according to Working Example 1 are ingested by a small child, it is clear that they are chewed a significantly greater number of times as compared to the cookies according to Comparative Example 1. Furthermore, the same result was observed both when a mouthful of cookie was ingested by a small child, and when a small child freely took a cookie to chew. Meanwhile, no significant changes were observed when a mouthful of cookie was ingested by an adult, and when an adult freely took a cookie to chew.

In other words, since the cookies according to Working Example 1 of the present invention, when compared to common cookies as a control, had lower breaking stress and brittleness stress, and higher breaking strain and cohesiveness, it is considered that it is difficult to form a food bolus inside the oral cavity of a small child, and thus small children will chew comparatively more. Additionally, for the same reasons, the cookies according to Working Example 1 of the present invention are considered readily to elicit grinding chewing more than cookies according to Comparative Example 1. The result is that the cookies according to Working Example 1 are confirmed to be baked goods that are suitable to enhance chewing ability of small children. Moreover, when the cookies of Working Example 1 are given to a small child, it was confirmed that a mouthful was chewed 30 times or more. For this reason, the cookies according to Working Example 1 are demonstrated to be suitable for the "Kaming 30" campaign.

### Working Example 9

Targeted cookies were prepared using the same methods as for Working Example 1, these cookies were ingested respectively by 1-year-old children, 2-year-old children, 3-year-old children, 4-year-old children and 5-year-old children to measure the amount bitten off as a mouthful and the length bitten off. In the results, the average amount bitten off as a mouthful and the average length bitten off by 1-year-old children were, respectively, 1.8 g and 13.1 mm. The average amount bitten off as a mouthful and the average length bitten off by 2-year-old children were, respectively, 1.7 g and 13.1 mm. The average amount bitten off as a mouthful and the average length bitten off by 3-year-old children were, respectively, 1.4 g and 10.1 mm. The average amount bitten off as a mouthful and the average length bitten off by 4-year-old children were, respectively, 1.7 g and 12.7 mm. The average amount bitten off as a mouthful and the average length bitten off by 5-year-old children were, respectively, 2.2 g and 15.8 mm (see Tables 5 and 6).

### (Comparative Example 2)

Except for molding the dough so that the cookies after baking would have the dimensions 13.5 mm × 8.4 mm × 74.0 mm, cookies were prepared in the same manner as for Comparative Example 1.

Then, these cookies were ingested respectively by 1-year-old children, 2-year-old children, 3-year-old children, 4-year-old children, and 5-year-old children to measure the amount bitten off as a mouthful and the length bitten off.
In the results, the average amount bitten off as a mouthful and the average length bitten off by 1-year-old children were, respectively, 0.7 g and 14.4 mm. The average amount bitten off as a mouthful and the average length bitten off by 2-year-old children were, respectively, 0.9 g and 16.8 mm. The average amount bitten off as a mouthful and the average length bitten off by 3-year-old children were, respectively, 0.6 g and 12.8 mm. The average amount bitten off as a mouthful and the average length bitten off by 4-year-old children were, respectively, 0.7 g and 15.0 mm. The average amount bitten off as a mouthful and the average length bitten off by 5-year-old children were, respectively, 1.0 g and 22.4 mm (see Tables 5 and 6).

**[Table 5]**

| | Working Example 9 | | | | | Comparative Example 2 | | | | |
|---|---|---|---|---|---|---|---|---|---|---|
| Test subject age | 1 | 2 | 3 | 4 | 5 | 1 | 2 | 3 | 4 | 5 |
| No. of data | 22 | 20 | 35 | 55 | 52 | 23 | 23 | 37 | 58 | 52 |
| Ave. mouthful weight (g) | 1.8 | 1.7 | 1.4 | 1.7 | 2.2 | 0.7 | 0.9 | 0.6 | 0.7 | 1.0 |
| Stand. dev. | 0.8 | 0.8 | 0.6 | 1.0 | 1.2 | 0.4 | 0.5 | 0.3 | 0.4 | 0.6 |

**[Table 6]**

| | Working Example 9 | | | | | Comparative Example 2 | | | | |
|---|---|---|---|---|---|---|---|---|---|---|
| Test subject age | 1 | 2 | 3 | 4 | 5 | 1 | 2 | 3 | 4 | 5 |
| No. of data | 22 | 20 | 35 | 55 | 52 | 23 | 23 | 37 | 58 | 52 |
| Ave. length (mm) | 13.1 | 13.1 | 10.1 | 12.7 | 15.8 | 14.4 | 16.8 | 12.8 | 15.0 | 22.4 |
| Stand. dev. | 5.9 | 5.3 | 4.1 | 6.9 | 7.9 | 7.3 | 6.6 | 4.9 | 8.0 | 10.5 |

Furthermore, the average amount of a cookie according to Working Example 9 bitten off as a mouthful by small children of any age was significantly more than the average amount of a cookie according to Comparative Example 2 bitten off as a mouthful, but no significant differences between age groups were observed.

In addition, the average length of a cookie according to Working Example 9 bitten off as a mouthful by small children of any age was significantly longer than the average length of a cookie according to Comparative Example 2 bitten off as a mouthful, but no significant differences between age groups were observed.

For this reason, the cookies according to Working Example 9 are not only suitable to enhance chewing ability in small children, but also are baked goods that are easier to eat for small children.

### INDUSTRIAL APPLICABILITY

The food product for enhancing chewing ability of the present invention, in particular baked goods for enhancing chewing ability for young children, can provide hardness, cohesiveness and the like suitable for the mouth of a small child during the period from before the deciduous dental arch is complete until the eruption of the permanent teeth begins. Furthermore, using the food product for enhancing chewing ability according to the present invention, it is possible to provide a form of food that complies with the "Kaming 30" campaign that has the goal of chewing each mouthful 30 times, and thus has extremely high industrial applicability.

## Claims

1. A food product for enhancing chewing ability, comprising:
at least one type of main raw material selected from the flour group consisting of wheat flour, rice flour and starchy flour; and
at least one type of secondary raw material selected from the group consisting of sorbitol and glycerol.

2. The food product for enhancing chewing ability as recited in Claim 1,
wherein the secondary raw material is composed of at least glycerol selected from the group consisting of sorbitol and glycerol.

3. The food product for enhancing chewing ability as recited in Claim 1 or Claim 2,
wherein the content of the secondary raw material is within the range of 0.5 mass% or more and 16 mass% or less based on the mass of the entire raw material.

4. The food product for enhancing chewing ability as recited in any one of Claims 1 through 3,
wherein the content of the secondary raw material is within the range of 1 mass% or more and 10 mass% or less based on the mass of the entire raw material.

5. The food product for enhancing chewing ability as recited in any one of Claims 1 through 4,
wherein the breaking stress is within the range of 3 × 10⁷ N/m² or more and 4.5 × 10⁷ N/m² or less.

6. The food product for enhancing chewing ability as recited in Claim 5,
wherein the breaking stress is within the range of 0.6 × 10⁷ N/m² or more and 4.0 × 10⁷ N/m² or less.

7. The food product for enhancing chewing ability as recited in Claim 5 or Claim 6,
wherein the breaking strain is within the range of 20% or more and 65% or less.

8. The food product for enhancing chewing ability as recited in Claim 7,
wherein the breaking strain is within the range of 25% or more and 50% or less.

9. The food product for enhancing chewing ability as recited in Claim 7 or Claim 8,
wherein the brittleness stress is within the range of 0 N/m² or more and 2 × 10⁶ N/m² or less, and the cohesiveness is within the range of 0.1 or more and 0.5 or less.

10. The food product for enhancing chewing ability as recited in Claim 9,
wherein the brittleness stress is within the range of 0 N/m² or more and 1 × 10⁶ N/m² or less, and the cohesiveness is within the range of 0.2 or more and 0.4 or less.

11. The food product for enhancing chewing ability as recited in any one of Claims 1 through 10, further comprising at least one type of thickening agent selected from the group consisting of soya protein, milk protein, chicken egg, syrup, isomerized glucose syrup, xanthan gum, guar gum and carrageenan.

12. The food product for enhancing chewing ability as recited in Claim 11,
wherein based on the mass of the entire raw materials, the soya protein accounts for a proportion that is 1 mass% or more and 10 mass% or less, the milk protein accounts for a proportion that is 1 mass% or more and 10 mass% or less, the chicken egg accounts for a proportion that is 1 mass% or more and 10 mass% or less, the syrup accounts for a proportion that is 2 mass% or more and 20 mass% or less, the isomerized glucose syrup accounts for a proportion that is 2 mass% or more and 20 mass% or less, the xanthan gum accounts for a proportion that is 0.02 mass% or more and 0.2 mass% or less, the guar gum accounts for a proportion that is 0.02 mass% or more and 0.2 mass% or less, and the carrageenan accounts for a proportion that is 0.02 mass% or more and 0.2 mass% or less.

13. The food product for enhancing chewing ability as recited in any one of Claims 1 through 12, the food product for enhancing chewing ability is intended for small children.

14. The food product for enhancing chewing ability as recited in any one of Claims 1 through 13,
wherein a width is within the range of 18 mm or more and 28 mm or less, a thickness is within the range of 7 mm or more and 14 mm or less, and a length is within the range of 50 mm or more and 100 mm or less.
